# EUROPEAN PATENT SPECIFICATION

(11) **EP 1 304 217 B1**
(45) Date of publication and mention of the grant of the patent: **05.05.2010**
(21) Application number: 02425633.1
(22) Date of filing: 17.10.2002
(51) Int. Cl.: B32B 15/08, B32B 27/36

(54) **Production process of seminanufactured bright tapes**
Verfahren zur Herstellung halbfertiger glänzender Bänder
Procédé de production de rubans semi-finis brillants

(30) Priority: 17.10.2001 IT RM20010616
(43) Date of publication of application: 23.04.2003
(73) Proprietor: Italcoat S.r.l., 80141 Napoli (IT)
(72) Inventor: Sinagra, Ciro, 80141 Napoli (IT)
(74) Representative: Leone, Mario

(56) References cited:
- EP-A- 0 901 899
- FR-A- 2 697 808

## Description

The present invention relates to a production process of a semimanufactured bright tape for making drawn products, in particular for cosmetic, alimentary, oenological or pharmaceutical use, and to related products.

In the cosmetic field several containers like phials, bottles, aerosol or spray bombs, canisters and the like employ closure capsules made of naked or varnished aluminium or of alloys thereof. Aesthetical reasons and demands for distinctiveness require such capsules to be bright rather than opaque.

Alike demands are to be found also for bottle caps for oenological use, in particular in the field of high-proof spirits.

In order to attain this brightness, in the manufacturing of said capsules two types of processes are mainly applied.

According to a first type of process, the rolling of the metal is carried out with bright-finished rolling cylinders. However, this type of process entails a drawback in that during the subsequent step of drawing the obtained foil, the resulting capsules undergo dulling, in particular on the side walls thereof.

Instead, according to a second type of process, the finished products are subjected to chemical and/or electrochemical brightening, oxidising, or electrocolouring processes. However, these latter processes are extremely costly and of remarkable environmental impact.

The technical problem underlying the present invention is that of providing a production process of semimanufactured bright tapes for making drawn products allowing to overcome the drawbacks mentioned above with reference to the known art.

FR 2 697 808 discloses a composite material for making bottle capsules or container bands, which material is made of an Aluminium layer upon which a polyethylene film is applied by bonding, possibly metallised e.g. with Aluminium.

EP 09 01 899 discloses heat bonding of a polyethylene terephthalate film with a metal sheet.

Such a problem is solved by a production process of a semimanufactured bright tape for making drawn products, and in particular for cosmetic, alimentary, oenological or pharmaceutical use, in accordance with claim 1.

The present invention provides some relevant advantages.

The main advantage lies in the fact that the surface of the tape of the invention remains bright during the subsequent step of forming, and in particular of drawing. Moreover, the end products require no chemical treatments aimed at providing brightness. Furthermore, the plastic film provides a high-resistance barrier against aggressive agents, in particular against corrosion.

Other advantages, features and the modes of employ of the present invention will be made apparent in the following detailed description of some embodiments thereof, given by way of example and not for limitative purposes. It will be made reference to the figures of the annexed drawings, wherein:
Figure 1 shows a schematic representation of an apparatus for implementing the method of the invention; and

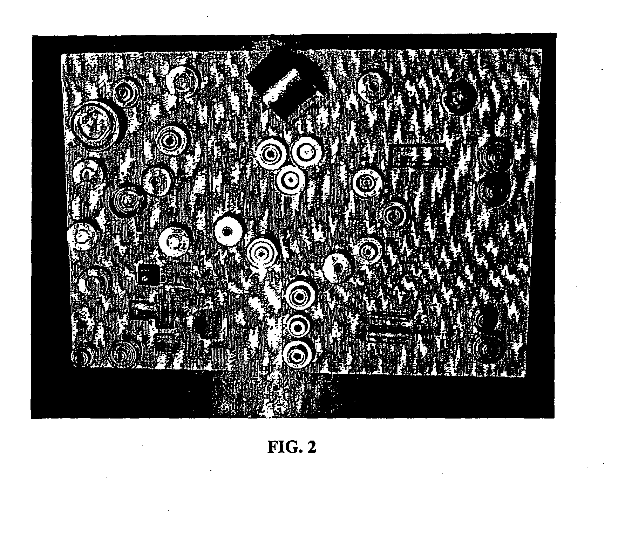

Figure 2 shows an example of the end products obtained with the process of the invention.

The process of the invention will be described hereinafter with specific reference to the production of a semimanufactured tape made of an aluminium foil and of a metallised plastic film, in particular of a metallised PET film, hot-coupled thereon. The latter was selected for its high brightness and flexibility.

A first step of the process provides the rolling of the aluminium, so as to obtain a foil susceptible of continuous machining in the subsequent steps of the process. This step can be carried out with known conventional techniques, hence a further description thereof will be omitted.

A second step of the process provides a so-called solvent dry coupling between the aluminium foil and said metallised PET film.

Such coupling is realised by a thermo-adhesive varnish of a polyester or of other chemical nature selected according to the chemical nature of the film to be coupled. In particular, in a step of the process said varnish is applied on both faces of the aluminium foil by a known bi-varnishing apparatus. A variant embodiment provides instead the application of the adhesive varnish on one foil face only.

Then, in another step of the process, the foil with the varnish applied thereon is passed through a known flotation oven in order to evaporate the solvents of the varnish itself.

At this point, in a subsequent step of the process there is provided the metallised PET film to realise said coupling. In the present embodiment it is provided that the film at issue be provided already metallised, in particular of a bright silver or bright gold colour, or of any other colour, and ready for the coupling.

However, it will be understood that, according to a variant embodiment, such film can instead be preset for coupling with the foil within the same production cycle of the end semimanufactured tape. In particular, prior to the coupling to the aluminium foil, the PET film can - needwise - undergo a step of single- or multi-colour printing in order to customise it to client requests, in particular making inscriptions, images, etc. This printing step can be carried out, e.g., with rotogravure or flexo-printing. In order to be compatible with the subsequent steps of the process, in the present embodiment such printing should be carried out with high temperature-resistant inks.

Hence, always according to this variant embodiment, the PET film is subjected to a surface-metallising step in order to provide brightness, and to an optional concomitant, preceding or subsequent colouring machining.

Returning to the coupling step, once outletted from the flotation oven the aluminium foil crosses a roll system that feeds the metallised PET film and makes it adhere thereto, onto both faces thereof. This adhering step occurs at a foil temperature typically comprised in a range of 200-220 °C. The varnish applied on the foil ensures a perfect adhering between the two components.

Experimental gas chromatography detections highlighted the residual quantity of solvents after the foil-film coupling to be lower than the limits set by the European and national norms in force regulating the production of packaging destined to the alimentary, pharmaceutical and cosmetic fields, and in particular to be lower than 5 mg/m².

It has to be stressed that the type of process applied required no step of seasoning at a controlled temperature and humidity the semimanufactured tape obtained in order to complete the reticulation of the adhesive prior to the making of the end products.

Hence, the process of the invention allows a continuous machining for attaining semimanufactured products like the abovedescribed bright tape or sheets obtained by cutting up the latter. These semimanufactured products can then be stored or sold in this form, or subjected to further machining steps in the same production cycle. In particular, in the present embodiment there is provided a final step of cold mechanical drawing, suitable for forming products useful in the cosmetic field, like e.g. closure caps, crimpable bottoms for aerosol or spray bombs and for spray perfume squirts, metallic ring nuts having external threads, ring nut covers, cap tops, containers or covers for creams and spreadable products in general. Moreover, this drawing step is suitable for the making of finished products useful in the alimentary field, like e.g. semiflexible containers and covers, or in the oenological field, like e.g. closure caps for soft drinks or spirits, ring nuts and cap tops for spirits.

Moreover, the abovedescribed production process of a semimanufactured tape allows also to provide, in association with or alternatively to said plastic film printing process, a step of customising the semimanufactured tape by lithography, silk-screen printing, striking or simple printing, e.g. ink-jet printing, to be carried out onto the semimanufactured sheet or tape or directly onto the finished product. In this same step there can also be provided the affixing of an optional end date of the product.

It will be understood that the various steps of the process of the invention, although sequentially described hereto, are preferably implemented in an apparatus providing a continuous machining cycle.

The further advantages of the present invention will by now have been appreciated. In particular, the products obtained with the proposed process are alcohol- and wear-resistant. Moreover, the finished products obtained by drawing can be pasteurised or sterilised.

It will be understood that the production process of the present invention is susceptible of several embodiments alternative to the hereto-described one.

E.g., there can be provided the employ of different materials for the foil, which may be made e.g. of an aluminium alloy, as well as for the high-brightness plastic film applied thereon, which could be any polymeric plastic material. Moreover, the latter could have colours different from the abovecited silver one, e.g. a bright gold colour.

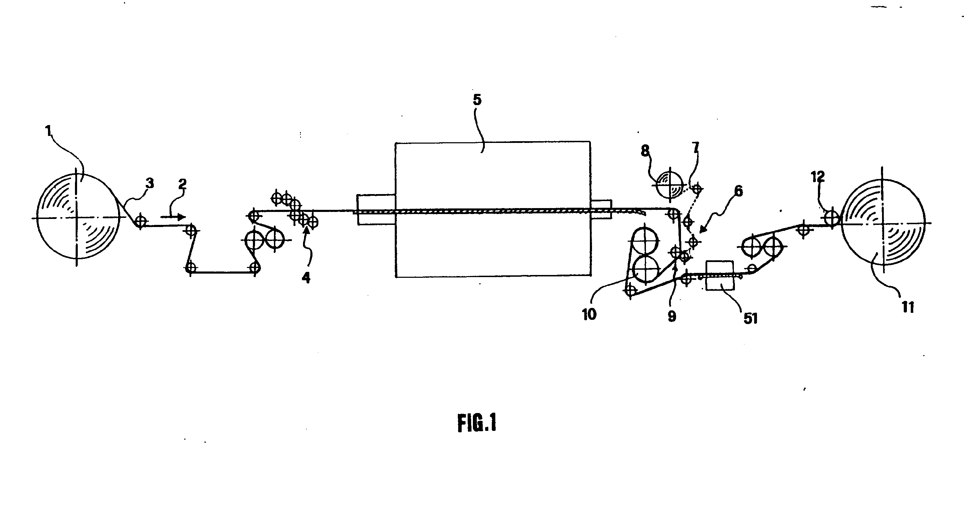

Figure 1 shows a schematic representation of an apparatus for carrying out the main steps of the method according to the present invention, based in particular on the first of the abovedisclosed processes.

Referring to this figure, a decoiling device 1 decoils a continuous aluminium foil 3 in a decoil direction indicated by an arrow 2.

Then, the foil 3 crosses a varnishing station 4, in which a bi-varnishing apparatus applies a thin layer of adhesive varnish of the abovedescribed type on both faces thereof.

Then, the foil 3 crosses a flotation oven 5, in which the organic solvents of the varnish evaporate.

Subsequently, always following the machining direction of the foil 3, onto the latter there is applied, in a coupling station 6, a metallised plastic film 7 uncoiling from a suitable coil 8. A dedicated roller system 9 applies metallised plastic film 7 onto one or both faces of the foil 3.

Then, the semimanufactured tape obtained is conveyed on a cooling bridle 10, and then in a flotation cooling tunnel 51.

Finally, the former is wound on a coil 11 by interposing a burnishing deflector roll 12.

The present invention has been hereto described with reference to preferred embodiments thereof. It is understood that other embodiments might exist, all falling within the concept of the same invention, and all comprised within the protective scope of the claims hereinafter.

## Claims

1. A production process of a semimanufactured bright tape for making drawn products, in particular for cosmetic, alimentary, oenological or pharmaceutical use, comprising a step of hot coupling a metallic foil made of a material selected from a group comprising aluminium and aluminium alloys with a metallised plastic film,
wherein said step of coupling the foil and the metallised plastic film therebetween is carried out at a temperature of said foil comprised in a range 200-220 °C and comprises a step of solvent dry coupling providing the interposition of a thermo-adhesive varnish between the foil and the metallised plastic film,
said process further comprising, prior to said step of coupling, a step of evaporation of the solvents of said varnish.

2. The process according to claim 1, wherein said metallised plastic film is metallised PET.

3. The process according to any of the preceding claims, wherein said thermo-adhesive varnish is of polyester nature.

4. The process according to any one of the preceding claims, wherein said step of coupling the foil and the metallised plastic film therebetween is carried out at both faces of said foil.

5. The process according to any one of the preceding claims, wherein said coupling step is carried out in a continuous machining cycle.

6. The process according to any one of the preceding claims, comprising, prior to said coupling step, a plastic film printing step and a subsequent metallising step of said plastic film.

7. The process according to claim 6, wherein said plastic film printing step is carried out by a rotogravure or flexo-printing technique.

8. The process according to claim 6 or 7, wherein said plastic film printing step provides the employ of a high-temperature resistant ink.

9. The process according to any one of the preceding claims, comprising, subsequently to said coupling step, a step of cutting up the semimanufactured tape into sheets.

10. The process according to any one of the preceding claims, comprising a step of cold mechanical drawing the semimanufactured tape in order to obtain finished products.

11. The process according to claim 10, comprising a step of pasteurising or sterilizing said finished products.

12. The process according to any one of the preceding claims, comprising, subsequently to said coupling step, a step of customising the semimanufactured tape by a machining selected from the group comprising lithography, silk-screen printing, mechanical striking and simple printing.

## Patentansprüche

1. Verfahren zur Herstellung eines halbfertigen glänzenden Bandes zum Herstellen von gezogenen Produkten, insbesondere für kosmetischen, alimentären, önologischen oder pharmazeutischen Gebrauch, beinhaltend einen Schritt des Heißkoppelns einer Metallfolie, die aus einem Material besteht, das aus einer Gruppe ausgewählt wird, welche Aluminium und Aluminiumlegierungen umfasst, mit einem metallisierten Kunststofffilm, wobei der Schritt des Koppelns der Folie und des metallisierten Kunststofffilms dazwischen bei einer Temperatur der Folie ausgeführt wird, die in einem Bereich von 200-220 °C liegt, und einen Schritt des Lösungsmitteltrockenkoppelns umfasst, welcher das Einbringen eines thermisch klebenden Lackes zwischen die Folie und den metallisierten Kunststofffilm beinhaltet,
wobei das Verfahren weiter, vor dem Schritt des Koppelns, einen Schritt des Verdampfens der Lösungsmittel des Lackes beinhaltet.

2. Verfahren nach Anspruch 1, wobei der metallisierte Kunststofffilm metallisiertes PET ist

3. Verfahren nach einem der vorhergehenden Ansprüche, wobei der thermisch klebende Lack nach Art von Polyester ist.

4. Verfahren nach einem der vorhergehenden Ansprüche, wobei der Schritt des Koppelns der Folie und des metallisierten Kunststofffilms dazwischen auf beiden Seiten der Folie ausgeführt wird.

5. Verfahren nach einem der vorhergehenden Ansprüche, wobei der Schritt des Koppelns in einem kontinuierlichen Bearbeitungszyklus ausgeführt wird.

6. Verfahren nach einem der vorhergehenden Ansprüche, beinhaltend, vor dem Kopplungsschritt, einen Kunststofffilmdruckschritt und einen anschließenden Metallisierungsschritt des Kunststofffilms.

7. Verfahren nach Anspruch 6, wobei der Kunststofffilmdruckschritt durch eine Rotationstiefdruckfarb- oder Flexodrucktechnik ausgeführt wird.

8. Verfahren nach Anspruch 6 oder 7, wobei der Kunststofffilmdruckschritt beinhaltet, eine hochtemperaturbeständige Druckfarbe zu verwenden.

9. Verfahren nach einem der vorhergehenden Ansprüche, beinhaltend einen Schritt des Zuschneidens des halbfertigen Bandes zu Bögen anschließend an den Kopplungsschritt.

10. Verfahren nach einem der vorhergehenden Ansprüche, beinhaltend einen Schritt des mechanischen Kaltziehens des halbfertigen Bandes, um fertige Produkte zu gewinnen.

11. Verfahren nach Anspruch 10, beinhaltend einen Schritt des Pasteurisierens oder Sterilisierens der fertigen Produkte.

12. Verfahren nach einem der vorhergehenden Ansprüche, beinhaltend, anschließend an den Kopplungsschritt, einen Schritt des kundenspezifischen Bearbeitens des halbfertigen Bandes durch eine Bearbeitung, die aus der Gruppe ausgewählt wird, welche Lithographie, Siebdruck, mechanisches Glattstreichen und einfaches Drucken umfasst.

## Revendications

1. Procédé de production d'un ruban semi-fini brillant pour réaliser des produits étirés, en particulier pour utilisation cosmétique, alimentaire, oenologique ou pharmaceutique, comprenant une étape de couplage à chaud d'une feuille métallique faite d'un matériau choisi dans un ensemble comprenant l'aluminium et les alliages d'aluminium avec un film plastique métallisé,
dans lequel ladite étape de couplage de la feuille et du film plastique métallisé entre eux est exécutée à une température de ladite feuille comprise dans un intervalle de 200 à 220 °C et comprend une étape de couplage à sec au solvant dans laquelle on place un vernis thermo-adhésif entre la feuille et le film plastique métallisé,
ledit procédé comprenant en outre, avant ladite étape de couplage, une étape d'évaporation des solvants dudit vernis.

2. Procédé selon la revendication 1, dans lequel ledit film plastique métallisé est en PET métallisé.

3. Procédé selon l'une quelconque des revendications précédentes, dans lequel ledit vernis thermo-adhésif est à base de polyester.

4. Procédé selon l'une quelconque des revendications précédentes, dans lequel ladite étape de couplage de la feuille et du film plastique métallisé entre eux est effectuée sur les deux faces de ladite feuille.

5. Procédé selon l'une quelconque des revendications précédentes, dans lequel ladite étape de couplage est exécutée dans un cycle de tirage continu.

6. Procédé selon l'une quelconque des revendications précédentes, comprenant, avant ladite étape de couplage, une étape d'impression de film plastique et une étape consécutive de métallisation dudit film plastique.

7. Procédé selon la revendication 6, dans lequel ladite étape d'impression du film plastique est exécutée au moyen d'une technique de rotogravure ou d'impression flexographique.

8. Procédé selon la revendication 6 ou 7, dans lequel ladite étape d'impression du film plastique prévoit l'emploi d'une encre résistant aux hautes températures.

9. Procédé selon l'une quelconque des revendications précédentes, comprenant, consécutivement à ladite étape de couplage, une étape consistant à couper le ruban semi-fini en feuilles.

10. Procédé selon l'une quelconque des revendications précédentes, comprenant une étape d'étirage mécanique à froid du ruban semi-fini pour obtenir des produits finis.

11. Procédé selon la revendication 10, comprenant une étape consistant à pasteuriser ou stériliser lesdits produits finis.

12. Procédé selon l'une quelconque des revendications précédentes, comprenant, consécutivement à ladite étape de couplage, une étape consistant à personnaliser le ruban semi-fini par un traitement choisi dans l'ensemble comprenant la lithographie, la sérigraphie, le marquage mécanique et l'impression simple.
